(19) Europäisches Patentamt
European Patent Office
Office européen des brevets

(11) **EP 2 491 999 B1**

(12) **EUROPEAN PATENT SPECIFICATION**

(45) Date of publication and mention
of the grant of the patent:
**04.12.2013 Bulletin 2013/49**

(21) Application number: **12156333.2**

(22) Date of filing: **21.02.2012**

(51) Int Cl.:
*B01D 53/94* (2006.01)    *B01J 23/42* (2006.01)
*B01J 23/63* (2006.01)    *B01J 23/96* (2006.01)
*B01J 35/00* (2006.01)    *B01J 37/02* (2006.01)
*B01J 38/02* (2006.01)    *F01N 3/022* (2006.01)
*F01N 3/035* (2006.01)

(54) **Exhaust purification filter**

Abgasreinigungsfilter

Filtre de purification d'échappement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.02.2011 JP 2011035733**

(43) Date of publication of application:
**29.08.2012 Bulletin 2012/35**

(73) Proprietor: **Honda Motor Co., Ltd.
Tokyo 107-8556 (JP)**

(72) Inventors:
• **Hirose, Satoshi
Saitama, 351-0193 (JP)**
• **Matsumoto, Takeshi
Saitama, 351-0193 (JP)**
• **Sugiyama, Tomomi
Saitama, 351-0193 (JP)**

• **Mori, Takeshi
Saitama, 351-0193 (JP)**
• **Seki, Chiaki
Saitama, 351-0193 (JP)**
• **Takeuchi, Hiroto
Saitama, 351-0193 (JP)**
• **Mamiya, Hiroyuki
Saitama, 351-0193 (JP)**

(74) Representative: **Böhm, Brigitte
Weickmann & Weickmann
Patentanwälte
Postfach 86 08 20
81635 München (DE)**

(56) References cited:
**EP-A1- 1 679 119      EP-A2- 1 657 410
WO-A1-2008/011146    US-A1- 2008 045 405**

EP 2 491 999 B1

## Description

This application is based on and claims the benefit of priority from Japanese Patent Application No. 2011-035733, filed on 22 February 2011, the content of which is incorporated herein by reference.

BACKGROUND OF THE INVENTION

Field of the Invention

The present invention relates to an exhaust purification filter. More specifically, the present invention relates to an exhaust purification filter that purifies HC, CO and PM in the exhaust discharged from an internal combustion engine.

Related Art

It has been known that lean-burn combustion internal combustion engines such as diesel engines have low carbon dioxide emissions, while having high particulate matter (hereinafter referred to as "PM.") emissions. PM is harmful to the human body, and a targeted substance for emission regulations. As a result, an exhaust purification filter for purifying PM is provided in the exhaust channel of diesel engines.

A DPF (Diesel Particulate Filter) that captures PM in the exhaust or a filter on which a catalyst that purifies the PM captured in this DPF is loaded has been used as the exhaust purification filter. With these exhaust purification filters, when PM is captured and deposits, a differential pressure arises between the upstream side thereof and the downstream side, leading to a decline in output power and a deterioration in fuel economy. As a result, a regeneration process to combustively remove the deposited PM has been executed at a stage at which PM has deposited to a certain extent.

The regeneration process is performed by oxidation reactions by way of a PM oxidation catalyst loaded on the exhaust purification filter; however, in order to cause these oxidation reactions to progress, it is necessary to elevate the temperature of the exhaust purification filter up to a certain temperature. As a result, an oxidation catalyst has been provided on an upstream side of the exhaust purification filter to oxidatively purify HC and CO in the exhaust by way of this oxidation catalyst, and elevating the temperature of the exhaust purification filter on the downstream side has been done using the heat of reaction generated upon this.

For example, the present applicants proposed technology providing a first purifying body that oxidatively purifies HC and CO in exhaust on an upstream side in an exhaust channel, and providing, on a downstream side thereof, a second purifying body composed of an exhaust purification filter that captures and oxidatively purifies PM in the exhaust. With this technology, the first purifying body includes a Pt-containing oxidation catalyst having high HC and CO oxidation performance, and the second purifying body includes an exhaust purification filter of a wall-flow structure on which an Ag-containing PM oxidation catalyst having high PM oxidation performance is loaded.

Patent Document 1: PCT International Publication No. WO 2010/041741

## SUMMARY OF THE INVENTION

However, as a method of efficiently elevating the temperature of the exhaust purification filter, it has been considered to provide an oxidation catalyst zone in which an oxidation catalyst is loaded on an upstream-side portion of the exhaust purification filter, and providing a PM oxidation catalyst zone in which a PM oxidation catalyst is loaded on a downstream-side portion. However, in a case of using a Pt-containing oxidation catalyst having high HC and CO oxidation performance, and an Ag-containing oxidation catalyst having high PM oxidation performance, loading overlap of Pt and Ag (hereinafter referred to as "overlap") arises in the boundary portion between the oxidation catalyst zone and the PM oxidation catalyst zone. When this occurs, there has been a problem in that the HC and CO oxidation performances of Pt decline from the Pt and Ag coexisting in this overlapping part.

As a method for solving this problem, it has been considered to provide a gap zone between the oxidation catalyst zone and the PM oxidation catalyst zone in which catalyst is not loaded. However, in the case of providing a gap zone, a part of the PM is captured by the gap zone, and the amount of PM flowing into the PM oxidation catalyst on the downstream side decreases. When this occurs, there has been a problem in that the amount of PM purified by the PM oxidation catalyst decreases, a result of which the PM purification rate declines.

The present invention has been made taking the above-mentioned problems into account, and has an object of providing an exhaust purification filter that can efficiently purify HC, CO and PM in the exhaust.

In order to achieve the above-mentioned object, the present invention provides an exhaust purification filter (e.g., the exhaust purification filter 1 described later) provided in an exhaust channel of an internal combustion engine, and having a filter main body (e.g., the DPF 10 described later) of wall-flow structure. The exhaust purification filter of the present invention includes: an oxidation catalyst zone (e.g., the oxidation catalyst zone Z1 described later) formed by loading a Pt-containing oxidation catalyst that oxidizes HC and CO in an upstream-side portion of the filter main body; a PM oxidation catalyst zone (e.g., the PM oxidation catalyst zone Z3 described later) formed by loading an Ag-containing PM oxidation catalyst that oxidizes PM in a downstream-side portion of the filter main body; and a gap zone (e.g., the gap zone Z2 described later) in which a catalyst is not loaded that is formed between the oxidation catalyst zone and the PM oxidation catalyst zone, and is characterized in that a gap rate represented by the following formula (1) is less than 15%, in which a length in an exhaust flow direction of the exhaust purification filter is L, a length in the exhaust flow direction of the oxidation catalyst zone is D, and a length in the exhaust flow direction of the gap zone is G.

$$\text{Gap rate}(\%) = G/(L-D) \times 100 \qquad (1)$$

In the present invention, the exhaust purification filter is configured from the oxidation catalyst zone formed by a Pt-containing oxidation catalyst being loaded on an upstream-side portion of the filter main body, the PM oxidation catalyst zone formed by an Ag-containing PM oxidation catalyst being loaded on a downstream-side portion of the filter main body, and the gap zone formed between these zones by a catalyst not being loaded.

Overlap of the Pt-containing oxidation catalyst and the Ag-containing PM oxidation catalyst is avoided by the gap zone being present between the oxidation catalyst zone in which the Pt-containing oxidation catalyst is loaded and the PM oxidation catalyst zone in which the Ag-containing PM oxidation catalyst is loaded. It is thereby possible to avoid a decline in the HC and CO oxidation performances of Pt due to the influence of Ag, and to efficiently purify HC and CO.

Herein, PM is combustively removed by the Ag-containing PM oxidation catalyst by contacting with the Ag. As a result, when ash contained in the exhaust (being burned embers of fuel and lubricating oil of the engine, and generated by additives such as magnesium being contained in the fuel and lubricating oil of the engine combusting) deposits by attaching to the surface of Ag, the contact of Ag with PM is inhibited, the PM oxidation performance of Ag declines, and the PM purification rate drops.

In this respect, since the present invention provides the gap zone, a portion of the ash is captured by the gap zone. When a portion of the ash is captured by the gap zone, the ash amount flowing into the PM oxidation catalyst decreases. It is thereby possible to suppress the contact of Ag with PM being inhibited by the ash and the PM oxidation performance of Ag declining, and thus the PM purification rate can be improved compared to a case of not providing the gap zone.

In addition, in the case of providing the gap zone, a portion of the PM will also be captured by the gap zone. When a portion of the PM is captured in the gap zone, the amount of PM flowing into the PM oxidation catalyst decreases. At this time, in a case of the length in the exhaust flow direction of the gap zone being short, the heat of reaction generated in each catalyst zone during regeneration will be transmitted to the entirety of the PM captured by the gap zone. As a result thereof, almost all of the PM captured by the gap zone is combustively removed, and thus the PM purification rate can be maintained.

However, if the length in the exhaust flow direction of the gap zone is excessively long, the heat of reaction generated by each catalyst zone during regeneration will be transmitted to only a portion of the PM captured by the gap zone. As a result thereof, only a portion of the PM captured by the gap zone will be combustively removed, and the PM purification rate will decline.

Therefore, the present invention sets the length in the exhaust flow direction of the gap zone in a predetermined range. More specifically, the proportion of the length in the exhaust flow direction of the gap zone relative to the total of the length in the exhaust flow direction of the gap zone and the length in the exhaust flow direction of the PM oxidation catalyst zone (i.e. gap rate expressed by the aforementioned formula (1)) is set to less than 15%. The improvement in the PM purification rate obtained by the ash trapping effect of the gap zone is greater than the decline in the PM purification rate due to PM captured in the gap zone not being combustively removed and remaining; therefore, the PM can be efficiently purified.

In this case, it is preferable for the filter main body to comprise a porous fire-resistant ceramic.

The present invention configures the filter main body with a porous fire-resistant ceramic. The above-mentioned effects of the present invention are thereby further improved.

Furthermore, in this case, it is preferable for the oxidation catalyst to include Pt supported on alumina, and for the PM oxidation catalyst to include Ag and Pd supported on ceria and zirconia.

The present invention uses an oxidation catalyst in which Pt is supported on alumina as the oxidation catalyst, and uses a PM oxidation catalyst in which Ag and Pd are supported on ceria and zirconia as the PM oxidation catalyst. The above-mentioned effects of the present invention are thereby further improved.

According to the present invention, it is possible to provide an exhaust purification filter that can efficiently purify HC, CO and PM in exhaust.

## BRIEF DESCRIPTION OF THE DRAWINGS

FIG. 1 is a diagram viewing an exhaust purification filter according to an embodiment of the present invention from an upstream side;
FIG. 2 is a vertical end view of the exhaust purification filter according to the embodiment;
FIG. 3 is a vertical end view schematically showing a catalyst loaded on the exhaust purification filter according to the embodiment; and
FIG. 4 is a graph showing relationships between a gap rate and the HC, CO and PM purification rates.

## DETAILED DESCRIPTION OF THE INVENTION

An embodiment of the present invention will be explained in detail hereinafter, while referring to the drawings.

An exhaust purification filter 1 according to an embodiment of the present invention is provided in an exhaust channel of a diesel engine, and purifies HC, CO and PM in the exhaust. The exhaust purification filter 1 includes a DPF 10 as a filter main body, an oxidation catalyst loaded on this DPF 10 and oxidizing HC and CO, and a PM oxidation catalyst loaded on the same DPF 10 and oxidizing PM.

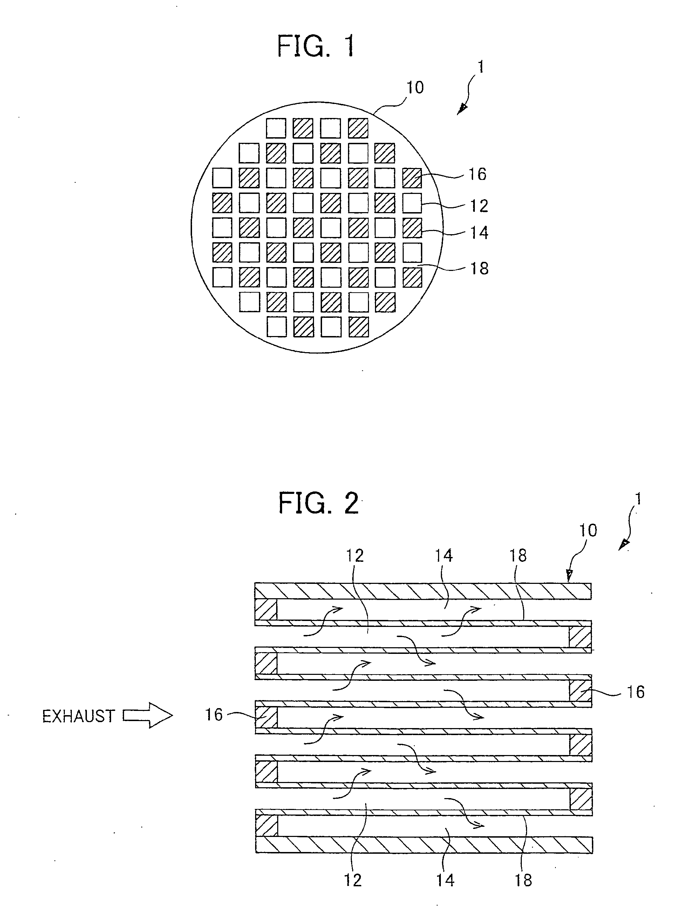

FIG. 1 is a diagram viewing the exhaust purification filter 1 according to the present embodiment from an upstream side. In addition, FIG. 2 is a vertical end view of the exhaust purification filter 1 according to the present embodiment.

As shown in FIGS. 1 and 2, the DPF 10 serving as a filter main body is a DPF of wall-flow structure depicting a cylindrical shape. The DPF of wall-flow structure has superior a PM capture rate, and can maintain good accessibility between the captured PM and the PM oxidation catalyst described later, and thus has a superior PM purification rate.

The DPF 10 includes a plurality of exhaust inlet paths 12 and exhaust outlet paths 14 extending in parallel to each other. These exhaust inlet paths 12 and exhaust outlet paths 14 are formed by sealing a plurality of cells provided in the DPF 10 in an alternating checkered pattern. The exhaust inlet paths 12 have an upstream end that is open, and a downstream end that is plugged by a sealing material 16. The exhaust outlet paths 14 have an upstream end that is plugged by the sealing material 16, and a downstream end that is open. These exhaust inlet paths 12 and exhaust outlet paths 14 are formed to be divided by thin partition walls 18.

The DPF 10 is formed from a porous fire-resistant ceramic. Silicon carbide and cordierite can be exemplified as the porous fire-resistant ceramic, for example. The pore size and porosity are set as appropriate within ranges in which the partition walls 18 function as a filter media that filters the PM in the exhaust.

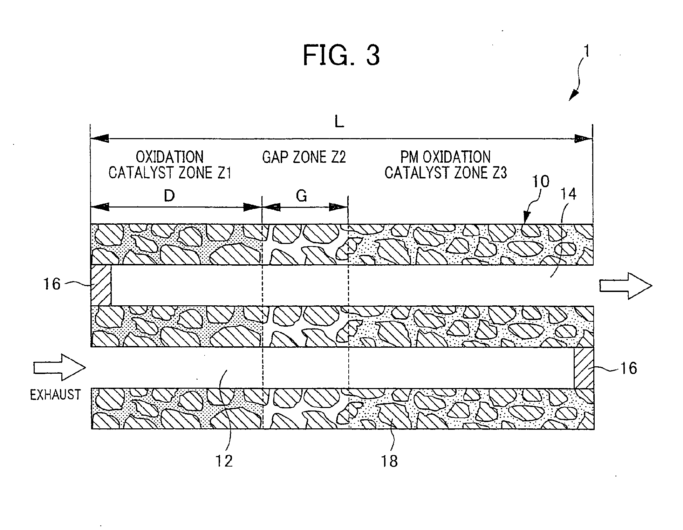

Next, the catalyst loaded on the exhaust purification filter 1 according to the present embodiment will be explained while referring to FIG. 3.

FIG. 3 is a vertical end view schematically showing the catalyst loaded on the exhaust purification filter 1. As shown in FIG. 3, the exhaust purification filter 1 is configured in the three zones arranged in order from the upstream side of an oxidation catalyst zone Z1 gap zone Z2, and PM oxidation catalyst zone Z3.

The oxidation catalyst zone Z1 is formed by a Pt-containing oxidation catalyst being loaded on an upstream-side portion of the DPF 10. The Pt-containing oxidation catalyst has high HC and CO oxidation performance, and purifies by efficiently oxidizing HC and CO in the exhaust flowing into the exhaust inlet path 12 and exhaust outlet path 14. The heat of reaction generated by the HC and CO oxidation reactions is employed in the PM oxidation reaction on the downstream side. It is preferable to use an oxidation catalyst on which Pt is supported on alumina as the oxidation catalyst, for example. The loading rate of the oxidation catalyst is set as appropriate depending on the exhaust characteristics of the engine, and is 25 to 70 g/L per unit volume of the DPF 10, for example.

The PM oxidation catalyst zone Z3 is formed by an Ag-containing PM oxidation catalyst being loaded on a downstream-side portion of the DPF 10. The Ag-containing PM oxidation catalyst has high PM oxidation performance, and purifies by efficiently oxidizing the PM captured by the DPF 10. It is preferable to use a PM oxidation catalyst in which Ag and Pd are supported on ceria and zirconia as the PM oxidation catalyst, for example. The loading rate of the PM oxidation catalyst is set as appropriate depending on the exhaust characteristics of the engine, and is 20 to 40 g/L per unit volume of the DPF 10, for example.

The gap zone Z2 is formed without a catalyst being loaded between the aforementioned oxidation catalyst zone and PM oxidation catalyst zone. In other words, neither catalyst is loaded in the gap zone.

The aforementioned three zones are formed by applying a zone coating method to the DPF 10. Herein, "zone coating" refers to the matter of having a catalyst loaded in a predetermined zone of a DPF.

More specifically, a slurry containing a predetermined amount of the aforementioned oxidation catalyst is prepared, and only the upstream-side portion of the DPF 10 is immersed in this slurry. At this time, the DPF 10 is immersed in the slurry by arranging such that the axial direction of the DPF 10 is parallel to the vertical direction. After a predetermined time has elapsed, the DPF 10 is pulled out to remove the excess slurry, and then is allowed to dry. The oxidation catalyst zone Z1 in which a predetermined amount of the oxidation catalyst is loaded on the upstream-side portion is thereby formed.

Next, a slurry containing a predetermined amount of the aforementioned PM oxidation catalyst is prepared, and only the downstream-side portion of the DPF 10 is immersed in this slurry. At this time, the DPF 10 is immersed in the slurry by arranging so that the axial direction of the DPF 10 is parallel to the vertical direction, and the oxidation catalyst zone does not immerse into the slurry. After a predetermined time has elapsed, the DPF 10 is pulled out to remove the excess slurry, and then is allowed to dry. The PM oxidation catalyst zone Z3 in which a predetermined amount of the PM oxidation catalyst is loaded on the downstream-side portion is thereby formed. At the same time, the gap zone Z2 in which neither catalyst has been loaded is formed between the oxidation catalyst zone and the PM oxidation catalyst zone.

In this regard, in the present embodiment, when the length in the exhaust flow direction of the exhaust purification filter 1 is defined as L, the length in the exhaust flow direction of the oxidation catalyst zone Z1 is defined as D, and the length in the exhaust flow direction of the gap zone Z2 is defined as G, the gap rate expressed by the following formula (1) is set so as to be less than 15%.

$$\text{Gap rate}(\%) = G/(L-D) \times 100 \qquad (1)$$

In the above formula (1), the length L in the exhaust flow direction of the exhaust purification filter 1 indicates the length from the upstream-side end face of the cylindrical exhaust purification filter 1 until the downstream-side end face thereof. Herein, the respective boundary surfaces between the three zones formed by the aforementioned zone coating method are all parallel to the upstream-side end face and downstream-side end face of the exhaust purification filter 1. As a result, the length D in the exhaust flow direction of the oxidation catalyst zone Z1 indicates the length from the upstream-side end face of the exhaust purification filter 1 to the boundary surface between the oxidation catalyst zone Z1 and the gap zone Z2, and this length is decided unequivocally. In addition, the length G in the exhaust flow direction of the gap zone Z2 indicates the length from the boundary surface between the oxidation catalyst zone Z1 and the gap zone Z2 to the boundary surface between the gap zone Z2 and the PM oxidation catalyst zone Z3, and this length is decided unequivocally.

When exhaust is introduced into the exhaust purification filter 1 having the above such configuration, first, the exhaust flows into the exhaust inlet paths 12. When this is done, the exhaust flowing into the exhaust inlet paths 12 passes through the porous partition walls 18 in the course of flowing to the downstream side. At this time, PM in the exhaust cannot pass through the partition wall 18, and deposits by attaching to the inner wall surfaces of the exhaust inlet paths 12, and the pore inner surfaces of the partition walls 18. On the other hand, exhaust having passed through the partition wall 18 flows into the exhaust outlet paths 14 adjacent to this exhaust inlet path 12, and flows to the downstream side to be discharged.

Next, regeneration processing to combustively remove the deposited PM is executed at a stage at which PM has deposited to a certain extent on the inner wall surfaces of the exhaust inlet paths 12 and the pore inner surfaces of the partition walls 18. More specifically, exhaust containing an abundance of HC and CO is introduced to the exhaust purification filter 1 by executing post injection. When this is done, this exhaust first flows into the oxidation catalyst zone Z1 on the upstream side, and the oxidation reactions of HC and CO progress by way of the oxidation catalyst. In this way, the HC and CO is oxidized and purified, and the PM oxidation catalyst zone Z3 on the downstream side thereby rises in temperature due to the heat of reaction generated by the oxidation reactions.

Next, when the PM oxidation catalyst zone Z3 elevated in temperature reaches a predetermined temperature, the oxidation reaction of PM progresses by way of the PM oxidation catalyst, and the PM captured in the DPF 10 is oxidized and purified.

The following effects are exerted according to the exhaust purification filter 1 according to the present embodiment.

In the present embodiment, the exhaust purification filter 1 is configured from the oxidation catalyst zone Z1 formed by a Pt-containing oxidation catalyst being loaded on an upstream-side portion of the filter main body 10, the PM oxidation catalyst zone Z3 formed by an Ag-containing PM oxidation catalyst being loaded on a downstream-side portion of the filter main body 10, and the gap zone Z2 formed between these zones by a catalyst not being loaded.

Overlap of the Pt-containing oxidation catalyst and the Ag-containing PM oxidation catalyst is avoided by the gap zone Z2 being present between the oxidation catalyst zone Z1 in which the Pt-containing oxidation catalyst is loaded and the PM oxidation catalyst zone Z3 in which the Ag-containing PM oxidation catalyst is loaded. It is thereby possible to avoid a decline in the HC and CO oxidation performances of Pt due to the influence of Ag, and to efficiently purify HC and CO.

Herein, PM is combustively removed by the Ag-containing PM oxidation catalyst by contacting with the Ag. As a result, when ash contained in the exhaust deposits by attaching to the surface of Ag, the contact of Ag with PM is inhibited, the PM oxidation performance of Ag declines, and the PM purification rate drops.

In this respect, since the present embodiment provides the gap zone Z2, a portion of the ash is captured by the gap zone Z2 When a portion of the ash is captured by the gap zone Z2, the ash amount flowing into the PM oxidation catalyst decreases. It is thereby possible to suppress the contact of Ag with PM being inhibited by the ash and the PM oxidation performance of Ag declining, and thus the PM purification rate can be improved compared to a case of not providing the gap zone Z2.

In addition, in the case of providing the gap zone Z2, a portion of the PM will also be captured by the gap zone Z2. When a portion of the PM is captured in the gap zone Z2, the amount of PM flowing into the PM oxidation catalyst decreases. At this time, in a case of the length in the exhaust flow direction of the gap zone Z2 being short, the heat of reaction generated in each catalyst zone during regeneration will be transmitted to the entirety of the PM captured by the gap zone Z2. As a result thereof, almost all of the PM captured by the gap zone Z2 is combustively removed, and thus the PM purification rate can be maintained.

However, if the length in the exhaust flow direction of the gap zone Z2 is excessively long, the heat of reaction generated by each catalyst zone during regeneration will be transmitted to only a portion of the PM captured by the gap zone Z2. As a result thereof, only a portion of the PM captured by the gap zone Z2 will be combustively removed, and the PM purification rate will decline.

Therefore, the present embodiment sets the length in the exhaust flow direction of the gap zone Z2 in a predetermined range. More specifically, the proportion of the length in the exhaust flow direction of the gap zone Z2 relative to the total of the length in the exhaust flow direction of the gap zone Z2 and the length in the exhaust flow direction of the PM oxidation catalyst zone Z3 (i.e. gap rate expressed by the aforementioned formula (1)) is set to less than 15%. The improvement in the PM purification rate obtained by the ash trapping effect of the gap zone Z2 is greater than the decline in the PM purification rate due to PM captured in the gap zone Z2 not being combustively removed and remaining; therefore, the PM can be efficiently purified.

In addition, the present embodiment configures the filter main body 10 with a porous fire-resistant ceramic. The above-mentioned effects are thereby further improved.

In addition, the present embodiment uses an oxidation catalyst in which Pt is supported on alumina as the oxidation catalyst, and uses a PM oxidation catalyst in which Ag and Pd are supported on ceria and zirconia as the PM oxidation catalyst. The above-mentioned effects are thereby further improved.

It should be noted that the present invention is not to be limited to the above-mentioned embodiment, and modifications and improvements within a scope that can achieve the object of the present invention are included in the present invention.

## EXAMPLES

Next, the present invention will be explained in further detail based on examples; however, the present invention is not to be limited thereto.

Example 1: Gap Rate 5%

First, a cylindrical DPF having the following characteristics was prepared. Herein, the length of the DPF described below corresponds to the length L in the exhaust flow direction of the exhaust purification filter.

DPF Characteristics
Material: SiC
Diameter: 143.8 mm
Length: 152.4 mm
Cell density: 300 cpi
Average pore size: 23 $\mu$m
Porosity: 52%

Next, adopting the zone coating method for the above-mentioned DPF, the oxidation catalyst zone was formed in the upstream-side portion, the PM oxidation catalyst zone was formed in the downstream-side portion, and the gap zone was formed between these zones.

More specifically, a slurry containing the oxidation catalyst made by loading Pt on alumina ($Pt/Al_2O_3$) was prepared, and only the upstream-side portion of the above-mentioned DPF was immersed into this slurry. At this time, the DPF was immersed into the slurry until a position 50 mm from the upstream-side end face thereof, by arranging the axial direction of the DPF so as to be parallel to the vertical direction. After a predetermined time had elapsed, the DPF was pulled out to remove the excess slurry, and then was allowed to dry. The oxidation catalyst zone in which the oxidation catalyst ($Pt/Al_2O_3$) is loaded on the upstream-side portion was thereby formed. The length D in the exhaust flow direction of the oxidation catalyst zone thus formed was 50 mm.

Next, a slurry containing the PM oxidation catalyst made by loading Ag and Pd on ceria and zirconia (Pd-Ag/$CeO_2ZrO_2$) was prepared, and only the downstream-side portion of the DPF on which the oxidation catalyst zone had already been formed on the upstream-side portion thereof was immersed in this slurry. At this time, the axial direction of the DPF was arranged so as to be parallel to the vertical direction, and the DPF was immersed into the slurry without immersing the oxidation catalyst zone into the slurry, by adjusting so that the gap rate expressed by the aforementioned formula (1) was 5%. After a predetermined time had elapsed, the DPF was pulled out to remove the excess slurry, and then was allowed to dry. The PM oxidation catalyst zone in which the PM oxidation catalyst is loaded on the downstream-side portion was thereby formed. At the same time, the gap zone in which neither catalyst is loaded was formed between the oxidation catalyst zone and the PM oxidation catalyst zone.

An exhaust purification filter having a gap rate of 5% was thereby obtained in the above way.

Example 2: Gap Rate 10%

Similar operations to Example 1 were conducted, except for immersing the DPF into the slurry by adjusting so that the gap rate was 10% upon forming the PM oxidation catalyst zone. An exhaust purification filter having a gap rate of 10% was thereby obtained.

Comparative Example 1: Overlap Rate 5%

Similar operations to Example 1 were conducted, except for immersing a portion of the oxidation catalyst zone into the slurry to adjust so that the overlap rate was 5% upon forming the PM oxidation catalyst zone. An exhaust purification filter having an overlap rate of 5% was thereby obtained.

It should be noted that the overlap rate was calculated by replacing the length G in the exhaust flow direction of the gap zone in the aforementioned formula (1) with the length in the exhaust flow direction of the overlap portion.

Comparative Example 2: Gap Rate 0%

Similar operations to Example 1 were conducted, except for immersing the DPF into the slurry by adjusting so that the gap rate was 0% upon forming the PM oxidation catalyst zone. An exhaust purification filter with a gap rate of 0%, i.e. without the oxidation catalyst and the PM oxidation catalyst overlapping, was obtained in which the oxidation catalyst zone and the PM oxidation catalyst zone were adjacent without a gap.

Comparative Example 3: Gap Rate 15%

Similar operations to Example 1 were conducted, except for immersing the DPF into the slurry by adjusting so that the gap rate was 15% upon forming the PM oxidation catalyst zone. An exhaust purification filter having a gap rate of 15% was thereby obtained.

Comparative Example 4: Gap Rate 25%

Similar operations to Example 1 were conducted, except for immersing the DPF into the slurry by adjusting so that the gap rate was 25% upon forming the PM oxidation catalyst zone. An exhaust purification filter having a gap rate of 25% was thereby obtained.

Comparative Example 5: Gap Rate 30%

Similar operations to Example 1 were executed, except for immersing the DPF into the slurry by adjusting so that the gap rate was 30% upon forming the PM oxidation catalyst zone. An exhaust purification filter having a gap rate of 30% was thereby obtained.

Evaluation

PM Purification Performance

Using a bench engine (2200 cc diesel engine), operation equivalent to travelling of the NEDC (New European Driving Cycle) was performed, and the exhaust thereof was introduced to each of the exhaust purification filters obtained in the Examples and Comparative Examples. PM contained in the exhaust was thereby captured and deposited in each of the exhaust purification filters. The deposition amount of the PM thus deposited was calculated from the weight difference of each of the exhaust purification filters between before and after operating.

After the deposition amount of PM reached a predetermined amount, post injection was executed by the above-mentioned bench engine, and a regeneration process was executed on each of the exhaust purification filters on which PM had deposited. More specifically, after the temperature inside of each of the exhaust purification filters was raised to approximately 600°C by post injection, the deposited PM was combustively removed for two minutes. The combusted amount of PM was calculated from the weight difference of each of the exhaust purification filters before and after execution of the regeneration process.

With the PM combustion amount of the exhaust purification filter of Comparative Example 2 in which the gap rate was set to 0% defined as 100, the evaluation of the PM purification performance was conducted by calculating the PM combustion amount of each of the exhaust purification filters relative to this. The results are shown in Table 1.

HC and CO Purification Performance

For each of the exhaust purification filters obtained in the Examples and Comparative Examples, a model-gas temperature elevation test was conducted, and the HC and CO purification rates were measured. The model-gas temperature elevation test conditions were as follows. Similarly to the above-mentioned evaluation of the PM purification performance, the evaluation of the HC and CO purification performance was conducted by calculating, with HC purification rate and CO purification rate of the exhaust purification filter of Comparative Example 2 in which the gap rate was set to 0% defined as 100, respectively, the HC purification rate and CO purification rate of each of the exhaust purification filters relative to this. The results are shown in Table 1.

(Model Gas Composition)

CO: 1100 ppm
HC: 420 ppmC
NO: 160 ppm
$CO_2$: 3.6%
$O_2$: 15%
$H_2O$ 3.5%
$N_2$: balance gas

(temperature elevation conditions)

Temperature elevation rate: 20°C/min
SV: 50000 $h^{-1}$

[Table.1]

| | Comparative Example 1 | Comparative Example 2 | Example 1 | Example 2 | Comparative Example 3 | Comparative Example 4 | Comparative Example 5 |
|---|---|---|---|---|---|---|---|
| Gap rate(%) | -5 | 0 | 5 | 10 | 15 | 25 | 30 |
| PM purification performance | 100 | 100 | 104 | 103 | 100 | 86 | 82 |
| HC purification performance | 96 | 100 | 100 | 100 | 100 | 100 | 100 |
| CO purification performance | 99 | 100 | 100 | 100 | 100 | 100 | 100 |

In Table 1, the gap rate of -5% in Comparative Example 1 indicates an overlap rate of 5%, and the gap rate of 0% in Comparative Example 2 indicates that the oxidation catalyst and the PM oxidation catalyst do not overlap and that the oxidation catalyst zone and the PM oxidation catalyst zone are adjacent without a gap. These descriptions are for convenience of explanation. The gap rate is actually premised on the existence of a gap zone, and the possible values of the gap rate are values greater than 0%.

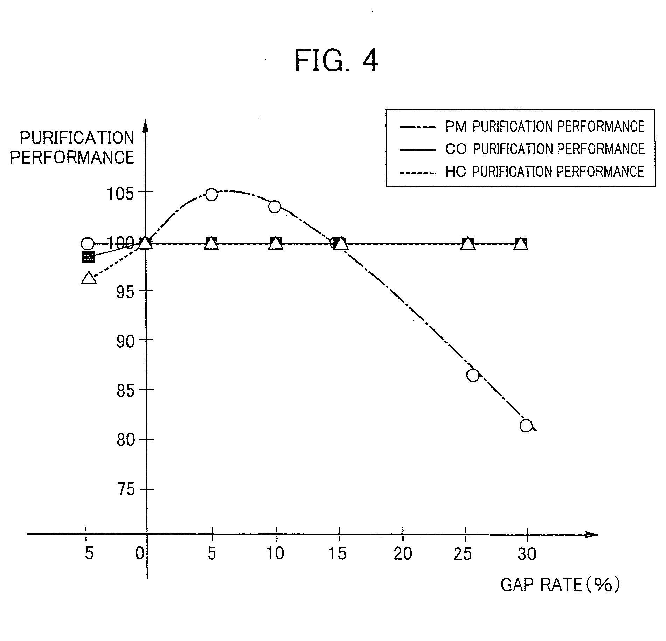

The relationships between the gap rate and the HC, CO and PM purification performances are shown in FIG. 4, based on the results in Table 1. It was confirmed that the HC purification performance and CO purification performance declined in the case of not providing a gap zone (Comparative Examples 1 and 2), as shown in Table 1 and FIG. 4. This was considered to be due to the HC and CO oxidation performances of the Pt in the oxidation catalyst declining from the influence from Ag in the PM oxidation catalyst due to the oxidation catalyst and PM oxidation catalyst being overlapping or adjacent without a gap.

In addition, it was confirmed that the PM purification performance declined in the case of the gap rate being 15% or higher (Comparative Examples 3 to 5). It was considered that the decline in the PM purification performance due to the PM captured in the gap zone not being combustively removed and remaining becomes greater than the improvement in the PM purification performance obtained by the ash capturing effect by way of the gap zone, a result of which the PM purification performance declined more than in a case of not providing the gap zone.

On the other hand, in the case of the gap rate being less than 15% (Examples 1 and 2), it was confirmed that the HC and CO purification performances did not decline, and the PM purification performance improved. It was considered that the improvement in the PM purification performance obtained by the capturing effect of ash by way of the gap zone becomes greater than the decline in the PM purification performance due to the PM captured in the gap zone not being combustively removed and remaining, a result of which the PM purification performance improves more than in a case of not providing the gap zone. The effects of the present invention have been proven in this way.

An exhaust purification filter is provided that can efficiently purify HC, CO and PM. An exhaust purification filter (1) includes: an oxidation catalyst zone (Z1) formed by loading a Pt-containing oxidation catalyst that oxidizes HC and CO on an upstream-side portion of a filter main body (10); a PM oxidation catalyst zone (Z3) formed by loading an Ag-containing PM oxidation catalyst that oxidizes PM on a downstream-side portion; and a gap zone (Z2) that is formed between these catalyst zones in which a catalyst is not loaded, characterized in that a gap rate (=G/ (L-D) × 100) is less than 15%, in which a length in an exhaust flow direction of the exhaust purification filter (1) is L, a length in the exhaust flow direction of the oxidation catalyst zone (Z1) is D, and a length in the exhaust flow direction of the gap zone (Z2) is G.

## Claims

1. An exhaust purification filter (1) provided in an exhaust channel of an internal combustion engine, and having a filter main body (10) of a wall-flow structure,
   the exhaust purification filter (1) comprising:

   an oxidation catalyst zone (Z1) formed by loading a Pt-containing oxidation catalyst that oxidizes HC and CO on an upstream-side portion of the filter main body (10);
   a PM oxidation catalyst zone (Z3) formed by loading an Ag-containing PM oxidation catalyst that oxidizes PM on a downstream-side portion of the filter main body (10); and
   a gap zone (Z2) that is formed between the oxidation catalyst zone (Z1) and the PM oxidation catalyst zone (Z3) in which a catalyst is not loaded,
   **characterized in that** a gap rate represented by the following formula (1) is less than 15%, wherein a length in an exhaust flow direction of the exhaust purification filter (1) is L, a length in the exhaust flow direction of the oxidation catalyst zone (Z1) is D, and a length in the exhaust flow direction of the gap zone (Z2) is G.

$$\text{Gap rate}(\%) = G/(L-D) \times 100 \quad (1)$$

2. An exhaust purification filter (1) according to claim 1, **characterized in that** the filter main body (10) comprises a porous fire-resistant ceramic.

3. An exhaust purification filter according to claim 1 or 2, **characterized in that** the oxidation catalyst includes Pt supported on alumina, and
   the PM oxidation catalyst includes Ag and Pd supported on ceria and zirconia.

**Patentansprüche**

1. Abgasreinigungsfilter (1), welcher in einem Abgaskanal eines Verbrennungsmotors bereitgestellt wird und einen Filter-Hauptkörper (10) einer Wall-Flow-Struktur aufweist, wobei der Abgasreinigungsfilter (1) umfasst:

    eine Oxidationskatalysatorzone (Z1), gebildet durch Laden eines Ptenthaltenden Oxidationskatalysators, welcher HC und CO oxidiert, auf einen stromaufwärtigen Bereich des Filter-Hauptkörpers (10);
    eine PM-Oxidationskatalysatorzone (Z3), gebildet durch Laden eines Ag-enthaltenden PM-Oxidationskatalysators, welcher PM oxidiert, auf einen stromabwärtigen Bereich des Filter-Hauptkörpers (10); und
    eine Abstands-Zone (Z2), welche zwischen der Oxidationskatalysatorzone (Z1) und der PM-Oxidationskatalysatorzone (Z3) gebildet wird, in welcher ein Katalysator nicht geladen wird,
    **dadurch gekennzeichnet, dass** eine Abstands-Rate, dargestellt durch die folgende Formel (1), weniger als 15% beträgt, wobei eine Länge in einer Abgasflussrichtung desAbgasreinigungsfilters (1) L ist, eine Länge in der Abgasflussrichtung der Oxidationskatalysatorzone (Z1) D ist, und eine Länge in der Abgasflussrichtung der Abstands-Zone (Z2) G ist.

$$\text{Abstands-Rate}(\%) = G/(L-D) \times 100 \quad (1)$$

2. Abgasreinigungsfilter (1) nach Anspruch 1, **dadurch gekennzeichnet, dass** der Filter-Hauptkörper (10) eine poröse feuerresistente Keramik umfasst.

3. Abgasreinigungsfilter (1) nach Anspruch 1, **dadurch gekennzeichnet, dass**
   der Oxidationskatalysator auf Aluminiumoxid geträgertes Pt einschließt, und
   der PM-Oxidationskatalysator auf Ceroxid und Zirkonoxid geträgertes Ag und Pd einschließt.

**Revendications**

1. Un filtre de purification d'échappement (1) disposé dans un canal d'échappement d'un moteur à combustion interne et doté d'un corps principal de filtre (10) d'une structure à parois filtrantes, le filtre de purification d'échappement (1) comprenant :

    une zone à catalyseur d'oxydation (Z1) formée par chargement d'un catalyseur d'oxydation contenant du Pt qui oxyde le HC et le CO sur une partie en amont du corps principal du filtre (10) ;
    une zone à catalyseur d'oxydation PM (Z3) formée par chargement d'un catalyseur d'oxydation PM contenant de l'Ag qui oxyde le PM sur une partie en aval du corps principal du filtre (10) ; et
    une zone d'intervalle (Z2) qui est formée entre la zone du catalyseur d'oxydation (Z1) et la zone du catalyseur d'oxydation PM (Z3) dans laquelle un catalyseur n'est pas chargé,
    **caractérisé en ce qu'**un taux d'intervalle représenté par la formule suivante (1) est inférieur à 15 %, dans laquelle une longueur dans une direction du flux d'échappement du filtre de purification d'échappement (1) est L, une longueur dans la direction du flux d'échappement de la zone du catalyseur d'oxydation (Z1) est D et une longueur dans la direction du flux d'échappement de la zone d'intervalle (Z2) est G.

$$\text{Taux d'intervalle}(\%) = G/(L-D) \times 100 \quad (1)$$

2. Un filtre de purification d'échappement (1) selon la revendication 1, **caractérisé en ce que** le corps principal du filtre (10) comprend une céramique poreuse résistant au feu.

3. Un filtre de purification d'échappement selon la revendication 1 ou 2, **caractérisé en ce que** le catalyseur d'oxydation comprend du Pt supporté par de l'alumine et
   le catalyseur d'oxydation PM comprend de l'Ag et du Pd supporté par de l'oxyde de cérium et de l'oxyde de zirconium.

# FIG. 1

# FIG. 2

EXHAUST

# FIG. 3

1

L

OXIDATION CATALYST ZONE Z1

GAP ZONE Z2

PM OXIDATION CATALYST ZONE Z3

10   14

D

G

16

16

EXHAUST

12

18

# FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011035733 A
- WO 2010041741 A